# EUROPÄISCHE PATENTSCHRIFT

(11) **EP 3 234 316 B1**
(45) Veröffentlichungstag und Bekanntmachung des Hinweises auf die Patenterteilung: **17.07.2019**
(21) Anmeldenummer: 15808417.8
(22) Anmeldetag: 14.12.2015
(51) Int. Cl.: F01N 3/20, F01N 3/28

(54) **VORRICHTUNG ZUR BEREITSTELLUNG EINES FLÜSSIGEN ADDITIVS**
DEVICE FOR PROVIDING A LIQUID ADDITIVE
DISPOSITIF DE PRODUCTION D'UN ADDITIF LIQUIDE

(30) Priorität: 16.12.2014 DE 102014118720
(43) Veröffentlichungstag der Anmeldung: 25.10.2017
(73) Patentinhaber: CPT Group GmbH, 30165 Hannover (DE)
(72) Erfinder: MAGUIN, Georges, 57155 Marly (FR)
(86) Internationale Anmeldenummer: PCT/EP2015/079575
(87) Internationale Veröffentlichungsnummer: WO 2016/096712

(56) Entgegenhaltungen:
- WO-A1-2012/069396
- DE-A1-102011 084 962
- DE-U1-202014 103 956

## Beschreibung

Die Erfindung betrifft eine Vorrichtung zur Bereitstellung eines flüssigen Additivs, welche insbesondere dazu geeignet ist, ein flüssiges Additiv zur Abgasreinigung für eine Abgasbehandlungsvorrichtung bereitzustellen.

Abgasbehandlungsvorrichtungen, in welchen ein flüssiges Additiv zur Abgasreinigung eingesetzt wird, werden in Kraftfahrzeugen regelmäßig dazu verwendet, Stickstoffoxidverbindungen im Abgas einer Verbrennungskraftmaschine zu reduzieren. In solchen Abgasbehandlungsvorrichtungen wird das Verfahren der selektiven katalytischen Reduktion [SCR-Verfahren, SCR = Selective Catalytic Reduction] durchgeführt. Beim SCR-Verfahren werden Stickstoffoxidverbindungen im Abgas der Verbrennungskraftmaschine mit Hilfe von Ammoniak reduziert. Ammoniak wird in Kraftfahrzeugen normalerweise nicht direkt bevorratet, sondern in Form eines flüssigen Additivs, welches abgasextern (in einem dafür vorgesehenen Reaktor außerhalb der Abgasbehandlungsvorrichtung) oder abgasintern (innerhalb der Abgasbehandlungsvorrichtung) zu Ammoniak umgesetzt wird.

Besonders häufig wird als flüssiges Additiv zur Abgasreinigung Harnstoff-Wasser-Lösung eingesetzt. Eine Harnstoff-Wasser-Lösung mit einem Harnstoffgehalt von 32,5 % ist beispielsweise unter dem Handelsnamen AdBlue® erhältlich.

Problematisch bei der Bereitstellung von derartigem flüssigen Additiv ist, dass dieses flüssige Additiv bei niedrigen Temperaturen einfrieren kann. Die beschriebene Harnstoff-Wasser-Lösung mit einem Harnstoffgehalt von 32,5 % friert beispielsweise bei -11 °C ein. Darüber hinaus ist es problematisch, dass der Abgasbehandlungsvorrichtung flüssige Additive normalerweise auch bei kalten Temperaturen zur Verfügung gestellt werden müssen, um eine ausreichende Reinigung der Abgase einer Verbrennungskraftmaschine zu gewährleisten. Es ist bekannt, zu diesen Zwecken Heizungen in und/oder an einem Tank zur Bevorratung von flüssigem Additiv vorzusehen. Darüber hinaus ist problematisch, dass derartige flüssige Additive sehr aggressiv sind und nicht jeder Tank und nicht jede Fördereinheit zur Förderung und Bereitstellung von derartigem flüssigen Additiv geeignet ist.

Aus der DE 10 2011 084 962 A1 ist es bekannt, eine Tankheizung zur Einsparung von Dichtelementen mit zwei Kunststoffschichten zu umspritzen.

Es ist Aufgabe der hier vorliegenden Erfindung die beschriebenen technischen Probleme zu lösen bzw. zumindest zu lindern. Es soll insbesondere eine besonders vorteilhafte Vorrichtung zur Bereitstellung eines flüssigen Additivs für die Abgasreinigung beschrieben werden, welche eine effektive Heizung des flüssigen Additivs ermöglicht, und welche besonders resistent gegen das flüssige Additiv ist.

Diese Aufgabe wird gelöst mit einer Vorrichtung gemäß den Merkmalen des Patentanspruchs 1. Weitere vorteilhafte Ausgestaltungen der Vorrichtung sind in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller Weise miteinander kombinierbar sind und weitere Ausgestaltungen der Erfindung aufzeigen. Die Beschreibung, insbesondere im Zusammenhang mit den Figuren, erläutert die Erfindung weiter und gibt zusätzliche Ausführungsbeispiele der Erfindung an.

Beschrieben werden soll eine Vorrichtung zur Breitstellung eines flüssigen Additivs, aufweisend mindestens einen metallischen Einsatz, der zumindest abschnittsweise mit einer Kunststoffbeschichtung aus Polyethylen (PE) beschichtet ist, wobei an der Kunststoffbeschichtung zumindest eine Kunststoffstruktur aus High-Density-Polyethylen (HD-PE) oder Polypropylen (PP) angespritzt ist und wenn der mindestens eine metallische Einsatz ein Gehäuse für eine Fördereinheit für flüssiges Additiv ist und die Kunststoffstruktur zumindest einen Abschnitt einer Tankwand ausbildet.

Metallische Einsätze bzw. Gehäuse für Vorrichtungen zur Bereitstellung von flüssigem Additiv haben sich als besonders vorteilhaft herausgestellt, weil Metall regelmäßig eine relativ hohe Wärmeleitfähigkeit aufweist. Es wurde weiter oben bereits erläutert, dass Heizungen bei Tanks für flüssiges Additiv und in Vorrichtungen zur Bereitstellung von flüssigem Additiv regelmäßig besonders wichtig sind. Einsätze aus Metall ermöglichen eine effektive Verteilung der Wärme, die von einer Heizung erzeugt wird. Demgegenüber sind Kunststoffe besonders beständig gegenüber flüssigem Additiv. Kunststoffe eignen sich daher insbesondere für Tanks für flüssiges Additiv. Darüber hinaus sind Kunststoffstrukturen häufig besonders günstig und einfach herstellbar, insbesondere wenn sehr komplexe Tankgeometrien notwendig sind, um Tanks an den in einem Kraftfahrzeug zur Verfügung stehenden Bauraum anzupassen. Tanks aus Kunststoff können beispielsweise mit Hilfe von Spritzgussverfahren hergestellt werden.

Die dauerhafte und fluiddichte Verbindung von Metall und Kunststoff ist jedoch bei Vorrichtungen zur Bereitstellung von flüssigem Additiv immer problematisch gewesen. Es hat sich im Rahmen von Experimenten herausgestellt, dass insbesondere aufgrund der unterschiedlichen thermischen Ausdehnungskoeffizienten von Metall und Kunststoff es häufig nur möglich ist relativ kleine Bauteile aus Metall fluiddicht in eine Tankwand aus Kunststoff einzusetzen. Dies scheint der Fall zu sein, weil die auftretenden absoluten thermischen Ausdehnungen dann nicht so groß sind. Allerdings sollte die Flüssigkeitsdichtigkeit von solchen Verbindungen zumindest theoretisch unabhängig von der Größe sein. Von größeren Bauteilen aus Metall löst sich eine Tankwand aus Kunststoff normalerweise irgendwann ab. Dies liegt insbesondere an regelmäßig wiederkehrenden Aufwärm- und Abkühlvorgängen der Tankwand und des Bauteils. Solch ein wiederholtes Aufwärmen erzeugt einen Luftspalt zwischen Metall und Kunststoff, der die Wärmeleitfähigkeit des Kontakts zwischen Metall und Kunststoff signifikant. Eine Wärmeleitfähigkeit von 0,4 bis 0,5 W/mK [Watt pro Meter und Kelvin] kann auf weniger als 0,025 W/mK reduziert sein. So ein Abfall an Wärmeleitfähigkeit vergrößert die Differenz der thermischen Ausdehungen von Metall und Kunststoff weiter, so dass die Zerstörung der Verbindung zwischen Metall und Kunststoff weiter zu nimmt.

Durch das hier beschriebene Konzept, einen metallischen Einsatz mit einer Kunststoffbeschichtung aus Polyethylen (PE) zu beschichten, und an diese Kunststoffbeschichtung dann Kunststoffstrukturen anzuspritzen, wird dieses Problem gelöst. Diese Technik ermöglicht dauerhafte Verbindungen von Kunststoff und Metall in einer Vorrichtung zur Bereitstellung von flüssigem Additiv, die auch großen Abweichungen der thermischen Ausdehnung von Kunststoff und Metall langfristig standhält ohne dass ein Luftspalt zwischen Plastik und Metall gebildet wird.

Als Polyethylen kann beispielsweise DuPontTMAbcite® zum Einsatz kommen. Abcite® ist ein thermoplastisches Beschichtungspulver, das sehr guten Korrosionsschutz und UV-Schutz für Metalle gewährleistet. Abcite® hat darüber hinaus eine hohe Schlagfestigkeit und ist in weiten Bereichen verformbar. Abcite hat insbesondere auch bei niedrigen Temperaturen noch eine hohe Schlagzähigkeit. Beispielsweise hat Abcite bei 23 °C eine Schlagzähigkeit von 760 kJ/m² [Kilojoule pro Quadratmeter] und bei -40 °C immer noch eine Schlagzähigkeit von 640 kJ/m². Darüber hinaus stehen die positiven Eigenschaften von Abcite® in einem großen Temperaturbereich von -100 °C bis ca. 80 °C zur Verfügung.

Darüber hinaus hat Abcite® eine hohe Zugfestigkeit und eine relativ niedrige thermische Ausdehnung.

Besonders bevorzugt ist die Kunststoffbeschichtung aus Polyethylen polarisiert. Eine Polarisation der Kunststoffbeschichtung kann beispielsweise dadurch erreicht werden, dass die Kunststoffbeschichtung während der Herstellung einem elektrischen Feld ausgesetzt wird.

Die Kunststoffstruktur kann aus hochdichtem Polyethylen [HD-PE] oder aus Polypropylen [PP] sein. Allerdings ist HD-PE das bevorzugte Material für die Kunststoffstruktur.

Hochdichtes Polyethylen [HD-PE, HD-PE = high density polyethylen] hat eine besonders hohe Festigkeit. Es zeichnet sich durch schwach verzweigte Polymerketten aus und hat daher eine hohe Dichte. Die Ausrichtung der Polymerketten in HD-PE ist relativ gleichmäßig. Daher ist HDD-PE zu einem hohen Massenanteil kristallin. Die Streckgrenze von HD-PE liegt üblicherweise über 20 N/mm² [Newton pro Quadratmillimeter] und die Dehnung an der Streckgrenze bei ca. 12 %. Die Dichte ist üblicherweise größer als 0,94 g/cm³ [Gramm pro Kubikzentimeter]. Der Elastizitätsmodul liegt bei Raumtemperatur über 800 N/mm². Die chemische Beständigkeit von PE-HD gegenüber Oxidationsmitteln ist hoch, insbesondere bei Temperaturen die normalerweise in einem Tank für ein flüssiges Additiv zur Abgasreinigung auftreten.

Polypropylen [PP] ist auch ein Kunststoffmaterial. Es hat sich heraus gestellt, dass es vergleichbare Eigenschaften wie HD-PE hat, wenn es für mit Spritzgußverfahren hergestellte Strukturen eingesetzt wird, die an Kunststoffbeschichtungen aus polarisiertem Polyethylen [PE] angesetzt sind.

Das Polyethylen ist insbesondere dadurch gekennzeichnet, dass es sich von dem hochdichten Polyethylen der Kunststoffstruktur unterscheidet. Insbesondere hat es im Vergleich zum hochdichten Polyethylen der Kunststoffstruktur eine geringere Festigkeit, eine geringe Dichte, einen geringeren Elastizitätsmodul und eine erhöhte Flexibilität.

Durch die Beschichtung aus (polarisiertem) Polyethylen bzw. Abcite® wird eine flexible Übergangsschicht zwischen dem metallischen Material des mindestens einen Einsatzes und dem Kunststoff der Kunststoffstruktur hergestellt. Insbesondere ist die Beschichtung in der Lage, relativ große Kräfte zwischen dem metallischen Einsatz und der Kunststoffstruktur zu übertragen, und bildet gleichzeitig eine Zwischenschicht, die zwischen der Wärmeausdehnung des Kunststoffmaterials und der Wärmeausdehung des metallischen Materials vermittelt. So wird eine dauerhafte Verbindung von dem metallischen Einsatz und von der Kunststoffstruktur gewährleistet.

Sowohl die Beschichtung aus (polarisiertem) Polyethylen bzw. Abcite® als auch die Kunststoffstruktur aus hochdichtem Polymer sind gegenüber flüssigem Additiv zur Abgasreinigung und insbesondere gegenüber Harnstoff-Wasser-Lösung beständig.

Die Kunststoffstruktur ist mit einem Spritzgußverfahren an die Kunststoffbeschichtung angespritzt. Das bedeutet insbesondere, dass die Kunststoffbeschichtung umspritzt ist. Die Kunststoffbeschichtung kann vollständig, teilweise oder sogar nur lokal umspritzt sein.

Eine Fördereinheit für flüssiges Additiv mit einem metallischen Gehäuse ist besonders vorteilhaft, weil an der Fördereinheit auch eine Heizung zum Aufheizen des flüssigen Additivs angeordnet sein kann und die Wärme von dieser Heizung von dem Gehäuse effektiv nach außen geleitet wird. Dies ist insbesondere dann vorteilhaft, wenn das Gehäuse mit der Fördereinheit in einen Tank für ein flüssiges Additiv integriert ist. Dann kann die Wärme von der Heizung in der Fördereinheit unmittelbar in das Innere des Tanks und damit in das flüssige Additiv gelangen.

Bei der Einbindung eines Gehäuses als metallischer Einsatz in eine Tankwand treten häufig besonders große Verbindungsflächen zwischen metallischem Einsatz und Tankwand auf. Diese besonders großen Verbindungsflächen müssen abgedichtet werden. Aufgrund von thermischen Ausdehnungen der Tankwand und des Einsatzes ist es regelmäßig wichtig, hier eine besonders feste Verbindung zwischen Metall und Kunststoff herzustellen, weil andererseits durch thermische Ausdehnungen Metall und Kunststoff wieder voneinander gelöst werden. Dies erzeugt einen Luftspalt zwischen Metall und Kunststoff und eine signifikante Reduzierung der Wärmeleitfähigkeit zwischen Metall und Kunststoff, wie weiter oben bereits erläutert wurde. Es hat sich herausgestellt, dass durch die beschriebene Verwendung einer Kunststoffbeschichtung aus polarisiertem Ethylen diese Anforderungen erfüllt werden können, und auch eine ausreichend feste Verbindung zwischen Metall und Kunststoff gewährleistet ist, die auch bei sehr großen Dichtflächen, wie bei einem Gehäuse, ausreichend ist. Ein Gehäuse für eine Fördereinheit hat vorzugsweise einen Durchmesser von mehr als 100 mm, besonders bevorzugt zwischen 120 und 200 mm.

Häufig ist es auch vorteilhaft, für Fördereinheiten für flüssiges Additiv Gehäuse aus Kunststoff zu verwenden, die eine Kunststoffstruktur bilden. Kunststoff ist für Gehäuse insbesondere dann das bevorzugte Material, wenn komplexe Gehäusegeometrien bereitgestellt werden sollen. Bei Gehäusen aus Kunststoff ist es aber regelmäßig ein Problem, dass keine ausreichende Wärmeleitfähigkeit von dem Tank in das Gehäuse bzw. von dem Gehäuse in den Tank gewährleistet ist. Aus diesem Grund ist es vorteilhaft, in ein solches Gehäuse metallische Einsätze einzubringen, welche die Wärmeleitfähigkeit durch das Gehäuse verbessern. Solche Einlagen sind ebenfalls besonders großflächig, und daher ist eine besonders feste Verbindung zwischen Kunststoff und Metall erforderlich, die beispielsweise mit der beschriebenen Kunststoffbeschichtung aus Polyethylen besonders effektiv bereitgestellt werden kann.

Weiterhin vorteilhaft ist die Vorrichtung, wenn der mindestens eine metallische Einsatz wärmeleitend mit einem Heizelement verbunden ist.

Besonders bevorzugt ist, dass ein Heizelement in direktem thermischen Kontakt mit dem metallischen Einsatz steht. So kann die Wärme von Heizelement besonders effektiv an den metallischen Einsatz weitergegeben werden. Ein Heizelement kann beispielsweise ein PTC-Heizelement [PTC = positive temperature coefficient] sein oder ein beliebiges anderes elektrisches Widerstandsheizelement. Es ist aber auch möglich, dass das Heizelement eine Leitung für eine Heizflüssigkeit oder ein beliebiger anderer elektrisch betriebener Heizer oder ein Widerstandsheizer ist.

Weiterhin vorteilhaft ist die Vorrichtung, wenn der mindestens eine metallische Einsatz sich zumindest abschnittsweise durch eine von der Kunststoffstruktur gebildete Tankwand hindurch erstreckt.

Mit Hilfe der beschriebenen Verbindung zwischen Metall und Kunststoff ist es sogar möglich, Metallstrukturen fluiddicht in eine Tankwand einzufügen, welche eine thermische Brücke von innen innerhalb des Tanks nach außen ermöglichen. Es ist möglich, dass eine Kunststoffbeschichtung nur abschnittsweise an dem metallischen Einsatz angebracht ist, wobei nur an den Abschnitten mit der Kunststoffbeschichtung auch tatsächlich eine Verbindung mit einer Kunststoffstruktur bzw. der Tankwand erfolgt und andere Bereiche keine Kunststoffbeschichtung aus Polyethylen aufweisen. Es ist aber auch möglich, dass ein metallischer Einsatz bzw. eine sich durch die Tankwand erstreckende metallische Struktur vollständig mit einer Beschichtung aus Polyethylen beschichtet ist. Eine solche vollständige Beschichtung schützt einerseits das Material des metallischen Einsatzes, andererseits ist eine solche Beschichtung häufig sehr viel einfacher auf den metallischen Einsatzes aufbringbar als eine lediglich abschnittsweise Beschichtung. So eine vollständige Beschichtung hat den positiven Nebeneffekt eine elektrische Isolierung zwischen der Metallstruktur und dem flüssigen Additiv bereitzustellen.

In einer anderen nicht zur Erfindung gehörenden Ausführung ist der metallische Einsatz eine Glocke, welche ein von einer Kunststoffstruktur gebildetes Gehäuse für eine Fördereinheit für flüssiges Additiv zumindest bereichsweise umgibt.

Eine solche Glocke ist insbesondere bei einer Fördereinheit mit einem Gehäuse hilfreich, welche in einen Tankboden eines Tanks für flüssiges Additiv eingesetzt ist. Bei einer solchen Fördereinheit besteht normalerweise nur eine relativ begrenzte Oberfläche der Fördereinheit zur Übertragung von Wärme von der Fördereinheit in das flüssige Additiv in dem Tank zur Verfügung. Durch eine außen um die Fördereinheit herum angeordnete Glocke kann diese Oberfläche erheblich vergrößert werden. Darüber hinaus ist das von einer solchen Glocke in einem Tank zusätzlich beanspruchte Volumen relativ klein. Insbesondere ist eine Glocke sehr einfach durch eine Öffnung in dem Tank (zusammen mit der Fördereinheit) einbringbar. Vorzugsweise existiert zwischen der Glocke und dem Gehäuse der Fördereinheit ein Spalt, durch welchen das flüssige Additiv von der Fördereinheit angesaugt werden kann.

Eine solche Glocke kann einen Abschnitt aufweisen, welcher sich durch das Gehäuse bzw. durch die Tankwand hindurch erstreckt. An diesem Abschnitt ist vorzugsweise eine Verbindung der Glocke und des Gehäuses ausgebildet, wobei bei dieser Verbindung die Glocke den metallischen Einsatz und das Gehäuse die Kunststoffstruktur bildet. Der benannte Abschnitt erstreckt sich durch die Wandung des Gehäuses hindurch. Zur Ausbildung der Verbindung ist die Beschichtung aus Polyethylen auf den benannten Abschnitt der Glocke aufgebracht.

Die Glocke als metallischer Einsatz ist besonders bevorzugt mit einer Heizung innerhalb des Gehäuses der Fördereinheit kombiniert. Die Glocke bildet dann eine sehr große metallische Fläche, über die Wärme von der Heizung innerhalb des Tanks abgegeben kann. In einer Ausführungsvariante kann eine Glocke geschlossen ausgeführt sein, so dass nur in einem unteren Bereich, in der Nähe eines Bodens eines Reduktionsmitteltanks, ein Spalt vorgesehen ist, durch welchen Reduktionsmittel in einen Zwischenraum zwischen der Glocke und dem Gehäuse gesaugt wird, wenn die Fördereinheit das flüssige Additiv fördert. In weiteren Ausführungsvarianten kann die Glocke auch geschlitzt oder gelocht sein, so dass diese im Wesentlichen nur zur Wärmeverteilung in dem Tank dient und keine unmittelbaren Auswirkungen auf die Strömungswege bei der Entnahme von Flüssigkeit aus dem Tank hat.

Weiterhin vorteilhaft ist die Vorrichtung, wenn die Kunststoffbeschichtung eine Schichtdicke zwischen 50 µm [Mikrometer] und 500 µm [Mikrometer] oder sogar bis zu 1500 µm [Mikrometer] aufweist.

Die Schichtdicke ist vorzugsweise größer, je größer die insgesamt mit der Tankwand verbundenen Flächen des metallischen Einsatzes sind. Je dicker die Beschichtung ist, umso besser kann die Beschichtung unterschiedliche thermische Ausdehnungen zwischen dem metallischen Einsatz und der Kunststoffstruktur kompensieren. Es hat sich herausgestellt, dass Schichtdicken von 50 µm bis 500 µm einerseits ausreichend genau und einfach hergestellt werden können und andererseits eine ausreichende Kompensation von unterschiedlichen thermischen Ausdehnungen zwischen der metallischen Struktur des Einsatzes und der Kunststoffstruktur ermöglichen.

Weiterhin vorteilhaft ist die Vorrichtung, wenn der mindestens eine metallische Einsatz aus Aluminium besteht.

Aluminium hat eine besonders hohe Wärmeleitfähigkeit und auf Aluminium hält die beschriebene Kunststoffbeschichtung aus Polyethylen besonders gut. Eine Polarisation der Beschichtung erhöht die Haltbarkeit der Verbindung zwischen Aluminium und Beschichtung noch weiter.

Hier auch beschrieben werden soll ein Kraftfahrzeug, aufweisend eine Verbrennungskraftmaschine, eine Abgasbehandlungsvorrichtung mit einem SCR-Katalysator zur Reinigung der Abgase der Verbrennungskraftmaschine und mit einer beschriebenen Vorrichtung zur Bereitstellung von flüssigem Additiv für die Abgasbehandlungsvorrichtung.

Die Erfindung sowie das technische Umfeld werden nachfolgend anhand der Figuren näher erläutert. Die Figuren zeigen besonders bevorzugte Ausführungsbeispiele der Erfindung, auf die die Erfindung jedoch nicht begrenzt ist. Insbesondere ist darauf hinzuweisen, dass die Figuren und vor allem die in den Figuren dargestellten Größenverhältnissen nur schematisch sind. Es zeigen:
- Fig. 1:: eine erste Ausführungsvariante einer beschriebenen Vorrichtung,
- Fig. 2:: eine zweite, nicht zur Erfindung gehörende Ausführungsvariante einer beschriebenen Vorrichtung,
- Fig. 3:: eine dritte, nicht zur Erfindung gehörende Ausführungsvariante einer beschriebenen Vorrichtung, und
- Fig. 4:: ein Kraftfahrzeug aufweisend eine beschriebene Vorrichtung.

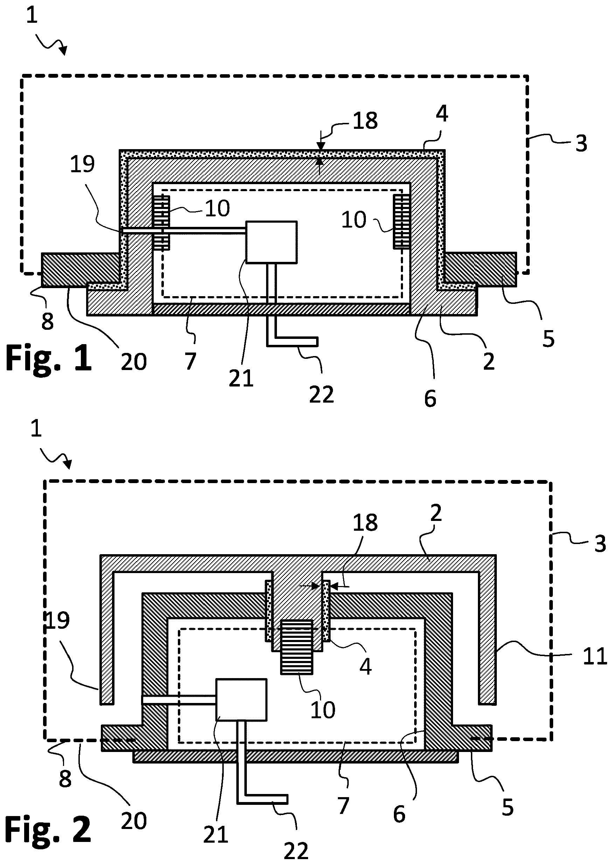

Die gleichen Merkmale der Fig. 1, 2 und 3 werden hier zunächst gemeinsam erläutert. Die Fig. 1, 2 und 3 zeigen jeweils eine Vorrichtung 1 zur Bereitstellung von flüssigem Additiv, aufweisend einen Tank 3, in welchem das flüssige Additiv gespeichert ist, mit einer Tankwand 8 aus Kunststoff.

In Fig. 1 bildet die Tankwand 8 aus Kunststoff eine Kunststoffstruktur 5. In diese Kunststoffstruktur 5 ist ein metallischer Einsatz 2 in eine Öffnung in dem Tankboden 20 eingesetzt, welcher ein Gehäuse 6 zur Aufnahme einer Fördereinheit 7 bildet. Das Gehäuse 6, das den metallischen Einsatz darstellt, hat eine Kunststoffbeschichtung 4, an welche die Tankwand 8 als Kunststoffstruktur 5 angespritzt ist. Die Fördereinheit 7 in dem Gehäuse 6 hat eine Pumpe 21, mit welcher flüssiges Additiv aus dem Tank 3 an einer Ansaugstelle 19 entnommen und an einem Bereitstellungsanschluss 22 bereitgestellt werden kann. In dem Gehäuse 6 befinden sich Heizelemente 10, mit welchen Flüssigkeit in dem Tank 3 aufgeheizt werden kann.

In Fig. 2 besteht das Gehäuse 6 der Fördereinheit 7 aus Kunststoff und der metallische Einsatz 2 ist von einer Glocke 11 gebildet, welche sich um das Gehäuse 6 herum erstreckt, wobei die Glocke 11 einen Abschnitt hat, welcher eine Kunststoffbeschichtung 4 aufweist und welcher sich durch das Gehäuse 6 hindurch erstreckt. Das Gehäuse 6 befindet sich auch gemäß Fig. 2 am Tankboden 20. Das Gehäuse 6 bildet hier die Kunststoffstruktur 5, welche an dem metallischen Einsatz 2 bzw. an die Kunststoffbeschichtung 4 an dem metallischen Einsatz 2 angespritzt ist. In unmittelbarem Kontakt mit der Glocke 11 ist ein Heizelement 10 zur Aufheizung von Flüssigkeit in dem Tank 3 über die Glocke 11. Die Fördereinheit 7 in dem Gehäuse 6 ist hier entsprechend zur Fig. 1 ausgebildet.

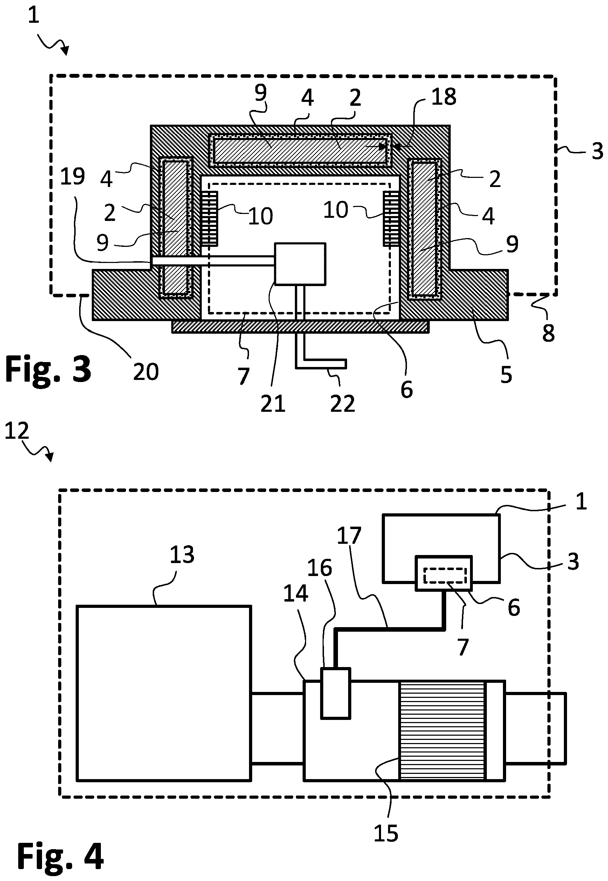

Fig. 3 zeigt eine Situation, in welcher das Gehäuse 6 der Fördereinheit 7 die Kunststoffstruktur 5 bildet, in welche Einlagen 9 als metallische Einsätze 2 eingelassen sind, wobei die metallischen Einsätze 2 bzw. Einlagen 9 jeweils eine Kunststoffbeschichtung 4 aufweisen, an welche das Gehäuse 6 als Kunststoffstruktur 5 angespritzt ist. Das Gehäuse 6 befindet sich auch gemäß Fig. 3 am Tankboden. Auch hier sind innerhalb des Gehäuses 6 Heizelemente 10 vorgesehen, mit welchen durch das Gehäuse 6 eine Aufheizung von Flüssigkeit in dem Tank 3 erfolgen kann. Die Fördereinheit 7 in dem Gehäuse 6 ist hier entsprechend zur Fig. 1 ausgebildet.

Die Fig. 4 zeigt ein Kraftfahrzeug 12 mit einer Verbrennungskraftmaschine 13 und einer Abgasbehandlungsvorrichtung 14 mit einem SCR-Katalysator 15 zur Reinigung der Abgase der Verbrennungskraftmaschine 13. Die Abgasbehandlungsvorrichtung 14 wird von einem Injektor 16 mit flüssigem Additiv zur Durchführung des SCR-Verfahrens in den SCR-Katalysator 15 versorgt, wobei der Injektor 16 wiederum mit flüssigem Additiv aus einer Vorrichtung 1 mit einem Tank 3 über eine Leitung 17 versorgt wird. Die Vorrichtung 1 weist dafür auch ein Gehäuse 6 und eine Fördereinheit 7 auf, die in den Tank 3 der Vorrichtung 1 eingesetzt sind.

## Patentansprüche

1. Vorrichtung (1) zur Breitstellung eines flüssigen Additivs, aufweisend mindestens einen metallischen Einsatz (2), der zumindest abschnittsweise mit einer Kunststoffbeschichtung (4) aus Polyethylen (PE) beschichtet ist, wobei an der Kunststoffbeschichtung (4) zumindest eine Kunststoffstruktur (5) aus hochdichtem Polyethylen (HD-PE) oder Polypropylen (PP) angespritzt ist, wobei der mindestens eine metallische Einsatz (2) ein Gehäuse (6) für eine Fördereinheit (7) für flüssiges Additiv ist, und die Kunststoffstruktur zumindest einen Abschnitt einer Tankwand (8) bildet.

2. Vorrichtung (1) nach einem der vorhergehenden Patentansprüche, wobei der mindestens eine metallische Einsatz (2) wärmeleitend mit einem Heizelement (10) verbunden ist.

3. Vorrichtung (1) nach einem der vorhergehenden Patentansprüche, wobei der mindestens eine metallische Einsatz (2) sich zumindest abschnittsweise durch eine von der Kunststoffstruktur (5) gebildete Tankwand (8) hindurch erstreckt.

4. Vorrichtung (1) nach einem der vorhergehenden Patentansprüche, wobei die Kunststoffbeschichtung (4) eine Schichtdicke (18) zwischen 50 µm [Mikrometern] und 500 µm [Mikrometern] aufweist.

5. Vorrichtung (1) nach einem der vorhergehenden Patentansprüche, wobei der mindestens eine metallische Einsatz (2) aus Aluminium besteht.

6. Kraftfahrzeug (12), aufweisend eine Verbrennungskraftmaschine (13), eine Abgasbehandlungsvorrichtung (14) mit einem SCR-Katalysator (15) zur Reinigung der Abgase der Verbrennungskraftmaschine (13) und mit einer Vorrichtung (1) nach einem der vorhergehenden Patentansprüche zur Bereitstellung von flüssigem Additiv für die Abgasbehandlungsvorrichtung (14).

## Claims

1. Device (1) for supplying a liquid additive, having at least one metallic insert (2), which is coated at least in sections with a plastics coating (4) composed of polyethylene (PE), wherein at least one plastics structure (5) composed of high-density polyethylene (HD-PE) or polypropylene (PP) is injection moulded onto the plastics coating (4), wherein the at least one metallic insert (2) is a housing (6) for a delivery unit (7) for liquid additive, and the plastics structure forms at least one section of a tank wall (8).

2. Device (1) according to one of the preceding patent claims, wherein the at least one metallic insert (2) is connected in heat-conducting fashion to a heating element (10) .

3. Device (1) according to one of the preceding patent claims, wherein the at least one metallic insert (2) extends at least in sections through a tank wall (8) formed by the plastics structure (5).

4. Device (1) according to one of the preceding patent claims, wherein the plastics coating (4) has a coating thickness (18) of between 50 µm [micrometres] and 500 µm [micrometres].

5. Device (1) according to one of the preceding patent claims, wherein the at least one insert (2) is composed of aluminium.

6. Motor vehicle (12) having an internal combustion engine (13) and having an exhaust-gas treatment device (14) with an SCR catalytic converter (15) for the purification of the exhaust gases of the internal combustion engine (13) and with a device (1) according to one of the preceding patent claims for supplying liquid additive for the exhaust-gas treatment device (14).

## Revendications

1. Dispositif (1) de fourniture d'un additif liquide, présentant au moins un insert métallique (2) qui est revêtu au moins en partie d'un revêtement de plastique (4) en polyéthylène (PE), au moins une structure en plastique (5) en polyéthylène haute densité (HD-PE) ou en polypropylène (PP) étant surmoulée sur le revêtement de plastique (4), l'au moins un insert métallique (2) étant un boîtier (6) pour une unité de transport (7) pour l'additif liquide, et la structure en plastique formant au moins une portion d'une paroi de réservoir (8) .

2. Dispositif (1) selon l'une quelconque des revendications précédentes, dans lequel l'au moins un insert métallique (2) est connecté de manière thermoconductrice à un élément chauffant (10).

3. Dispositif (1) selon l'une quelconque des revendications précédentes, dans lequel l'au moins un insert métallique (2) s'étend au moins en partie à travers une paroi de réservoir (8) formée par la structure en plastique (5).

4. Dispositif (1) selon l'une quelconque des revendications précédentes, dans lequel le revêtement de plastique (4) présente une épaisseur de couche (18) comprise entre 50 µm (micromètres) et 500 µm (micromètres).

5. Dispositif (1) selon l'une quelconque des revendications précédentes, dans lequel l'au moins un insert métallique (2) se compose d'aluminium.

6. Véhicule automobile (12), présentant un moteur à combustion interne (13), un dispositif de traitement des gaz d'échappement (14) avec un catalyseur RCS (15) pour purifier les gaz d'échappement du moteur à combustion interne (13) et avec un dispositif (1) selon l'une quelconque des revendications précédentes pour fournir un additif liquide pour le dispositif de traitement des gaz d'échappement (14).
